# EUROPEAN PATENT APPLICATION

(11) **EP 1 928 070 A2**
(43) Date of publication of application: **04.06.2008**
(21) Application number: 07122000.8
(22) Date of filing: 30.11.2007
(51) Int. Cl.: H02J 7/00

(54) **Method for supplying power with light voltage battery, device and system thereof**

(30) Priority: 30.11.2006 CN 200610160747; 13.09.2007 CN 200710145464; 08.11.2007 CN 200710177001
(71) Applicant: Beijing Hi-Tech Wealth Investment & Development Co., Ltd., 100083 Beijing (CN)
(72) Inventor: Zhang, Zhengyu,c/o Beijing Hi-Tech Wealth I. & D., Zhongguangun East Road, Haidian District 100083, Beijing (CN); Zhan, Changshou c/o Beijing HI-Tech Wealth I. & D., Zhongguangcun East Road, Haidian District 100083, Beijing (CN); Sun, Jianling,c/o Beijing Hi-Tech Wealth I. & D., Zhongguangcun East Road, Haidian District 100083, Beijing (CN); Jiang, Xiaochi,c/o Beijing Hi-Tech Wealth I. & D., Zhongguangun East Road, Haidian District 100083, Beijing (CN)
(74) Representative: Körber, Martin Hans

(57) **Abstract**

The present invention relates to solar battery technological, and embodiments of the present invention provide a method, device and system for supplying power with light voltage battery. In the embodiments provided by the present invention, through a parameter scale value corresponding to electric energy generated by a tested object under current illumination condition, by adaptively adjusting a connection manner among multiple light voltage battery units in the light voltage battery combination unit, it is applicable to obtain needed electric energy from the light voltage battery combination unit. By this method, when light voltage battery is applied and illumination condition keeps changing, it can avoid the light voltage battery combination unit from outputting over-voltage or under-voltage electric energy. More important, in the present invention's embodiment, a DC/DC converter is not used to adjust battery's output voltage, thus the embodiment can avoid wasting the electric energy collected by light voltage battery to the best and provide sufficient electric energy for power-consuming devices to the best.

## Description

### Field of the Invention

The present invention relates to solar energy application technology, more particularly to, method for supplying power with light voltage battery, device and system thereof.

### Background of the Invention

Solar battery, also called photovoltaic cell and abbreviated as light voltage battery hereafter, is a device which can make use of photoelectric material's photovoltaic effect to transform luminous energy into electric energy. Light voltage battery is usually composed of photoelectric material including silicon material, polynary compounds such as GaAs, or biological solar energy material and so on. The photoelectric material can collect luminous energy to supply electric energy at any time, without a power supply network or electricity generation materials, so light voltage battery can be used widely.

Because photoelectric conversion efficiency of photoelectric material is low, usually not more than 30%, and because light voltage battery board in small-scale product utilizing solar energy can only occupy limited area, generally limited electric energy is obtained from a limit-sized light voltage battery under a certain illumination condition, and generated voltage is also very low. For example, with standard illumination intensity, a monocrystalline silicon battery with 15625 mm² effective light absorption area can generate a 0.508V working voltage. While in practical application, rated voltage of accumulator battery, which is to be charged by utilizing the electric energy generated by light voltage battery, is usually far higher than the voltage that a single light voltage battery can generate under intense illumination condition.

Generally, it is not feasible to use the single light voltage battery to charge the accumulator battery. And the feasible way is to connect multiple light voltage batteries in series to form a light voltage battery power supply device, which can provide proper charge voltage for the accumulator battery. However, voltage generated by the light voltage battery is greatly influenced by the illumination condition. For example, in an environment with good illumination condition, the voltage generated by each light voltage battery is relatively higher than that generated in an environment with bad illumination condition. Therefore, in the environment with good illumination condition, the charge voltage provided by multiple light voltage batteries serially connected may be higher than the accumulator battery's rated voltage, that is, there may be an over-voltage situation. Resistance characteristic of the light voltage batteries serially connected can limit current generated, which leads to great wastage of photoelectric conversion. But in an environment with bad illumination condition, the charge voltage provided by multiple light voltage batteries serially connected may be lower than the accumulator battery's rated voltage, that is, there may be low voltage situation and the accumulator can't be charged.

In order to avoid the above mentioned over voltage or low voltage situation, a DC/DC converter, which can converse an input voltage into a constant output voltage, is used to adjust power supply device's output voltage. The DC/DC converters usually include a boost converter for increasing the voltage, a buck converter for decreasing the voltage and a boost/buck converter. In practical situation, the boost/buck converter is used generally.

In the over voltage situation, the boost/buck converter is always used to decrease the output voltage of light voltage battery power supply device. In the low voltage situation, the boost/buck converter is always used to increase the output voltage of light voltage battery power supply device.

However, the boost/buck converter also arises some problems. On one hand, during operation processes, the DC/DC converter will consume the electric energy collected by light voltage battery power supply device, which leads to energy waste. On the other hand, if the electric energy collected by light voltage battery power supply device is not sufficient enough, part of or all of the electric energy will be consumed by DC/DC converter, so the accumulator battery can not be charged in this situation.

Therefore, the existing scheme of employing light voltage battery to charge accumulator battery is still under improvement.

### Summary of the Invention

Embodiment of the present invention provides a method for supplying power with light voltage battery, which avoids using the DC/DC converter to adjust light voltage battery's output voltage, avoids wasting the electric energy collected by light voltage battery to the best, and provides sufficient electric energy for power consuming device.

A method for supplying power with light voltage battery includes the following processes:
measuring a parameter scale value corresponding to electric energy generated by a tested object under current illumination condition, wherein the tested object is a light voltage battery unit in a light voltage battery combination unit, and the light voltage battery combination unit comprises a plurality of light voltage battery units and converts luminous energy received under current illumination condition into electric energy;
selecting, according to a measuring result of the parameter scale value, a connection strategy that is corresponding to the measuring result and is used to indicate a working connection manner among the multiple light voltage battery units; and
connecting, according to the working connection manner indicated by the connection strategy, the multiple light voltage battery units.

Embodiment of the present invention provides a device for supplying power with light voltage battery, which avoids using the DC/DC converter to adjust light voltage battery's output voltage, avoids wasting the electric energy collected by light voltage battery to the best, and provides sufficient electric energy for power consuming device.

A device for supplying power with light voltage battery includes:
a light voltage battery combination unit including a plurality of light voltage battery units, converting electric energy received under current illumination condition into electric energy;
a measure unit, measuring a parameter scale value corresponding to the electric energy generated by a tested object, and the tested object is a light voltage battery unit in the light voltage battery combination unit;
a control unit, according to a measuring result of the parameter scale value, selecting a connection strategy that is corresponding to the measuring result and is used to indicate a working connection manner among the multiple light voltage battery units, and connecting the multiple light voltage battery units according to the working connection manner indicated by the connection strategy;
an output unit, outputting the electric energy generated by the light voltage battery combination unit and processed by the control unit.

Embodiment of the present invention provides a system for supplying power with light voltage battery, which avoids using the DC/DC converter to adjust light voltage battery's output voltage, avoids wasting the electric energy collected by light voltage battery to the best, and provides sufficient electric energy for power consuming device.

A system for supplying power with light voltage battery includes:
a device adopting light voltage battery to supply electric power, a symmetrical or asymmetrical accumulator battery;
and the device that adopts light voltage battery to supply electric power includes: a light voltage battery combination unit including a plurality of light voltage battery units, a measure unit and a control unit;
the light voltage battery combination unit is configured to convert the electric energy received under current illumination condition into electric energy;
the measure unit is configured to measure a parameter scale value corresponding to the electric energy generated by a tested object which is the light voltage battery unit in light voltage battery combination unit;
the control unit is configured to select a connection strategy according to a measuring result of parameter scale value, wherein the connection strategy corresponds to the measuring result and is used to indicate a working connection manner among the multiple light voltage battery units, and the control unit is also configured to connect the multiple light voltage battery units according to the working connection manner indicated by the connection strategy;
the output unit is configured to output the electric energy generated by the light voltage battery combination unit and processed by the control unit
the symmetrical or asymmetrical accumulator battery is configured to receive and store the electric energy outputted by the output unit; and
the light voltage unit includes one or a plurality of light voltage batteries, and the light voltage battery is made from a kind of photoelectric material; or the light voltage battery includes: two kinds of light voltage battery modules, wherein one light voltage battery module is made from a polynary compound photoelectric material whose photoelectric conversion efficiency is higher than that of silicon material; the other light voltage battery module is made from photoelectric materials other than the polynary compound photoelectric material; and
the asymmetrical accumulator battery includes at least two accumulator modules, wherein capacity of one accumulator module is lower than that of other accumulator modules.

Embodiment of the present invention also provides a kind of asymmetrical accumulator battery including:
at least two kinds of accumulator battery modules, wherein capacity of one accumulator battery module is less than that of other accumulator battery modules.

Embodiment of the present invention also provides a kind of light voltage battery, which can convert the received luminous energy into electric energy including:
two kinds of light voltage battery modules, wherein one light voltage battery module is made from polynary compound photoelectric material whose photoelectric conversion efficiency is higher than that of silicon material; and the other accumulator battery module is made from photoelectric materials other than the polynary compound photoelectric material.

In the method, device and system for supplying power with light voltage battery provided by embodiments of the present invention, based on the parameter scale value corresponding to the electric energy generated by a tested object under a certain illumination condition, connection manner of multiple light voltage battery units in the light voltage battery combination unit is adaptively adjusted. In the way, it is applicable to obtain the electric energy for practical application from the light voltage battery combination unit. According to the method, when light voltage battery is used and illumination condition keeps changing, the light voltage battery combination unit can avoid outputting over-voltage or low-voltage electric energy. Furthermore, the present invention's embodiments avoid using the DC/DC converter to adjust the battery's output voltage, and avoid wasting the electric energy collected by light voltage battery to the best, and provide sufficient electric energy to the power-consuming devices to the best.

### Brief Description of the Drawings

Figure 1 is a flowchart illustrating a method for supplying power with light voltage battery provided by embodiment of the present invention.
Figure 2 is a diagram illustrating a device for supplying power with light voltage battery provided by embodiment of the present invention.
Figure 3 is a diagram illustrating a system for supplying power with light voltage battery provided by embodiment of the present invention.
Figure 4 is a diagram illustrating processes of controlling accumulator module to charge/discharge in a system which utilizes light voltage battery to supply power, in the present invention's embodiment.
Figure 5 is a diagram illustrating structure of the system for supplying power with light voltage battery provided by embodiment of the present invention.
Figure 6 is a diagram illustrating structure of the light voltage battery including asymmetrical accumulator battery in embodiment of the present invention.
Figure 7 is a diagram illustrating embodiment of the first light voltage battery including asymmetrical accumulator battery.
Figure 8 is a diagram illustrating circuit for the device, which utilizes light voltage battery to supply power, to charge the accumulator battery in an embodiment of the present invention.
Figure 9 is a flowchart illustrating the process of charging the accumulator battery in embodiment shown in the Figure 8.
Figure 10 is a diagram illustrating the parallel circuit of four light voltage battery units in the light voltage battery unit in embodiment shown in the Figure 8.
Figure 11 is a diagram illustrating the serial-parallel circuit of four light voltage battery units in the light voltage battery unit in embodiment shown in the Figure 8.
Figure 12 is a diagram illustrating the serial circuit of four light voltage battery units in the light voltage battery unit in embodiment shown in the Figure 8.
Figure 13 is a diagram illustrating the circuit for the device, which utilizes light voltage battery to supply power, to charge the accumulator battery in another embodiment of the present invention.
Figure 14 is a flowchart illustrating the process of charging the accumulator battery in the embodiment shown in Figure 13.
Figure 15 is a diagram illustrating the parallel circuit of three light voltage battery units in the light voltage battery unit in the embodiment shown in Figure 13.
Figure 16 is a diagram illustrating the serial circuit of three light voltage battery units in the light voltage battery unit in the embodiment shown in Figure 13.
Figure 17 is a diagram illustrating the circuit for the device, which utilizes light voltage battery to supply power, to charge the accumulator battery in another embodiment of the present invention.
Figure 18 is a diagram illustrating the circuit for the device, which utilizes light voltage battery to supply power, to charge the asymmetrical accumulator battery in an embodiment of the present invention.
Figure 19 is a diagram illustrating another circuit for the device, which utilizes light voltage battery to supply power, to charge the asymmetrical accumulator battery in another embodiment of the present invention.
Figure 20a is a diagram illustrating an embodiment in which light voltage battery is applied in mobile terminal.
Figure 20b is a diagram illustrating another embodiment in which light voltage battery is applied in mobile terminal in embodiment of the present invention.
Figure 20c is a diagram illustrating another embodiment in which light voltage battery is applied in mobile terminal in embodiment of the present invention.
Figure 21 is a diagram illustrating structure of the power supply device in embodiment of the present invention.
Figure 22 is a diagram illustrating structure of the power supply system in embodiment of the present invention.
Figure 23 is a flowchart illustrating the power supply method provided by embodiment of the present invention.
Figure 24 is a diagram illustrating a clamshell mobile phone that is configured with the above mentioned power supply system illustrated in embodiment of the present invention.
Figure 25 is a diagram illustrating a working circuit of the power supply system configured in the mobile phone shown in Figure 24.

### Detailed Description of the Invention

The present invention will be further described in detail with reference to accompanying drawings and specific embodiments hereafter.

According to embodiments of the present invention, based on parameter scale value corresponding to electric energy generated by a tested object under a certain illumination condition, connection manner of multiple light voltage battery units in light voltage battery combination unit is adaptively adjusted. In the way, it is applicable to obtain the electric energy for practical application from the light voltage battery combination unit, and provide the electric energy to power consuming device.

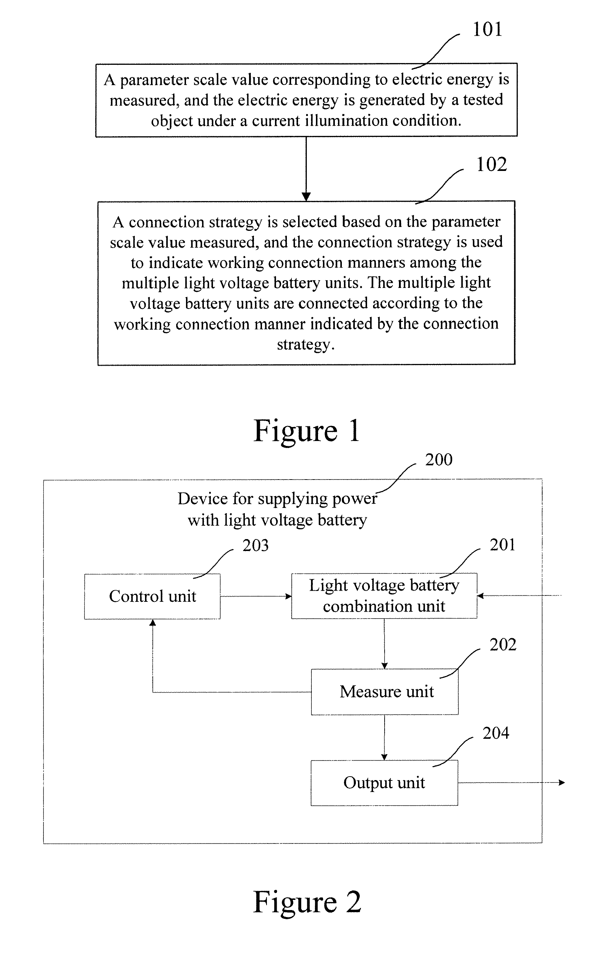

With reference to Figure 1, Figure 1 is a flowchart illustrating a method for supplying power with light voltage battery provided by embodiment of the present invention. The method includes the processes as follows.

According to processes in block 101, a parameter scale value corresponding to electric energy is measured, and the electric energy is generated by a tested object under a current illumination condition. The tested object is light voltage battery units in a light voltage battery combination unit. The light voltage battery combination unit includes a plurality of light voltage battery units, and converts luminous energy received under the current illumination condition into electric energy.

According to processes in block 102, a connection strategy is selected based on the parameter scale value measured, and the connection strategy is used to indicate working connection manners among the multiple light voltage battery units. The multiple light voltage battery units are connected according to the working connection manner indicated by the connection strategy.

Figure 2 is a diagram illustrating a device for supplying power with light voltage battery provided by embodiment of the present invention. With reference to Figure 2, the device 200 includes a light voltage battery combination unit 201, a measure unit 202, a control unit 203 and an output unit 204. And the light voltage battery combination unit 201 includes a plurality of light voltage battery units.

The light voltage battery combination unit 201 converts the electric energy, which is received under the current illumination condition, into electric energy.

The measure unit 202 measures the parameter scale value corresponding to the electric energy generated by the tested object. The tested object is the light voltage battery unit in light voltage battery combination unit 201.

The control unit 203, according to the parameter scale value measured, selects a connection strategy, The connection strategy is used to indicate a working connection manners among the multiple light voltage battery units. And the multiple light voltage battery units are connected according to the working connection manner indicated by the connection strategy.

The output unit 204 outputs the electric energy generated by the light voltage battery combination unit 201 and processed by the control unit 203. The output unit 204 is used for a connection with a power consuming device.

In embodiment of the present invention, preferably, the parameter scale value can be a current value or a voltage value of electricity energy generated. Accordingly, the measure unit 202 can be a current detector, a voltage detector or other devices which can measure the parameter scale value. In practical application, the parameter scale value can also be a heat energy scale value; therefore, the measure unit 202 can also be a thermometer, a thermal sensor or the like.

Taking the voltage measured by the measure unit 202 for example, the voltage generated by the light voltage battery combination unit 201 is measured under the current illumination condition, and the tested object is the light voltage battery combination unit 201. If each light voltage battery unit in the light voltage battery combination unit 201 can generate the same amount of electricity under the same illumination condition, a single light voltage battery unit can be the tested object. And the measure unit 202 measures the voltage generated at the single light voltage battery unit. If the multiple light voltage battery units generate different amounts of electricity under the same illumination condition, the multiple light voltage battery units can be the tested objects, and the measure unit 202 measures the voltages generated by the multiple light voltage battery units. According to a result of measure unit 202, the control unit 203 selects a corresponding connection strategy, so as to adjust the connection manner among multiple light voltage battery units. The result of measure unit is also referred to as measuring result in the description hereafter.

For different connect strategies, the ways of the control unit 203 selecting connection strategy according to the result of measure unit 202 are different. If connection strategy is made according to the overall voltage or overall current generated by light voltage battery combination unit, the control unit 203 can figure out the overall voltage or overall current according to the result of the measure unit 202, and select a corresponding connection strategy. If the connection strategy is made according to the voltage or current generated at a single light voltage battery unit, the control unit 203 can directly select corresponding connection strategy according to the result of the measure unit 202.

If each light voltage battery unit generates the same amount of electricity under the same illumination condition, the connection strategy can be made according to the voltage or current generated at a single light voltage battery unit. And if the voltage is measured, the connection strategy is as follows.

If the result of the measure unit 202 is larger than or equivalent to a preset high voltage threshold, in the connections among a plurality of light voltage battery units, at least one light voltage battery unit's connection manner is changed from serial connection to parallel connection. For example, there are four light voltage battery units in the original circuit. And two parallel connected light voltage battery units are serially connected to the other two light voltage battery units. If it is measured that a single light voltage battery unit's voltage is already over high voltage threshold, which means that the current illumination condition is very good, the original connection manner of the four light voltage battery units will lead to over voltage. Therefore, according to this connection strategy, the two serially connected light voltage battery units can be parallel connected, or one of or both of the light voltage battery units which are serially connected originally, can be parallel connected to the two light voltage battery units parallel connected originally. According to this connection strategy, the overall voltage generated by light voltage battery combination unit 201 can be decreased, and the output current outputted by light voltage battery combination unit 201 can be increased. So, if this light voltage battery combination unit 201 is used to charge accumulator battery, the time for charging the accumulator battery can be shortened.

Or, if the result of the measure unit 202 is smaller than or equivalent to a preset low voltage threshold, in the connections among a plurality of light voltage battery units, at least one light voltage battery unit's connection manner is changed from parallel connection to serial connection. For example, there are four light voltage battery units in the original circuit. And two parallel connected light voltage battery units are serially connected to the other two light voltage battery units. If it is measured that a single light voltage battery unit's voltage is lower than the low voltage threshold, which means that the current illumination condition is bad, the original connection manner of the four light voltage battery units will lead to low voltage. Therefore, according to this connection strategy, the two parallel connected light voltage battery units can be changed to serially connect to each other, so as to increase the overall voltage generated by light voltage battery combination unit.

If the current is measured, the connection strategy is as follows.

If the result of the measure unit 202 is larger than or equivalent to a preset high current threshold, in the connections among a plurality of light voltage battery units, at least one light voltage battery unit's connection manner is changed from parallel connection to serial connection. In this way, the circuit's current can be decreased, the damage, such as burning down the accumulator battery, to the power consuming device in an environment with good illumination condition can be avoided.

Or, if the result of the measure unit 202 is smaller than or equivalent to a preset low current threshold, in the connections among a plurality of light voltage battery units, at least one light voltage battery unit's connection manner is changed from serial connection to parallel connection. In this way, the circuit's current can be increased, and charging current for the power consuming device's accumulator battery can be supplied.

The connection strategy that is made in allusion to the over voltage or overall current generated by light voltage battery combination unit is similar to the strategy that is made in allusion to a single light voltage battery unit's measurement result. For instance, it can be regulated that, if the overall voltage exceeds the preset high voltage threshold of overall voltage, in the connection circuit of multiple light voltage battery units, at least one parallel circuit is added in order to decrease the overall voltage; and so on.

In addition, according to characteristics of the existing light voltage battery, there is a corresponding relation between illumination intensity and the coulomb or voltage generated by light voltage battery under this illumination intensity. Moreover, each light voltage battery corresponds to a light voltage threshold, namely the maximum light voltage coulomb that a light voltage battery can generate is limited. So when the light voltage threshold is reached, even if illumination intensity is increased, the light voltage coulomb that the light voltage battery can generate will not increase. Accordingly, in the present invention, the light voltage battery unit also has a corresponding maximum light voltage value. Therefore, in practical application, when the construction of light voltage battery unit is set, it is suggested to consider the relation between the maximum light voltage value of this light voltage battery unit and the expected working voltage outputted by light voltage battery combination unit, and to set the corresponding connection strategy.

For example, a simple setting of connection strategy is as follows. The light voltage battery unit is configured with a maximum light voltage value which is a little larger than the maximum working voltage outputted by light voltage battery combination unit. And the maximum working voltage is the rated voltage of accumulator device. So a corresponding connection strategy is set as follows: if the measured voltage generated by a single light voltage battery unit is smaller than the rated voltage, more light voltage battery units are serially connected; if the measured voltage generated by a single light voltage battery unit is larger than the rated voltage, more light voltage battery units are parallel connected.

In practical application, the connection manner of the light voltage battery units and connection strategy of light voltage battery unit can be determined according to practical situation, so it's difficult to list all examples.

To sum up, the power supply scheme provided by embodiment of the present invention is to, by measuring relevant parameters of the electric energy generated by the tested object, control the connection manner among a plurality of light voltage battery units, so as to make light voltage battery combination unit output appropriate amount of electric energy under different illumination conditions.

In embodiment of the present invention, preferably supposing that each light voltage battery unit can generate the same amount of electricity under the same illumination condition, the voltage generated by a single light voltage battery unit is to be measured. In practical application, there are many ways to measure the voltage generated by a single light voltage battery unit. One way of measuring the voltage generated by the single light voltage battery unit is direct measurement. In this way, a voltage detector parallel connected to the single light voltage battery unit is used to measure the voltage generated by the single light voltage battery unit under the current illumination condition. The other way of measuring the voltage generated by the single light voltage battery unit is equivalent measurement. In this way, a voltage detector is used to measure the voltages of a plurality of parallel connected light voltage battery units. In the equivalent measurement, its measure effect is basically the same as that of the above mentioned direct measurement. Similarly, the current measurement can be performed either in the direct measurement way or in the equivalent measurement way, which is not to be described in detail hereby.

In the embodiment of the present invention, according to the result of the measure unit 202 and the connection strategy, it is applicable to connect the multiple light voltage battery units in light voltage battery combination unit via an appropriate connection manner. According to the embodiment of the present invention, the collected luminous energy can be collected efficiently when the lamination condition is good, for example, a plurality of light voltage battery units can be connected in parallel and the accumulator device is charged effectively with little current. According to the embodiment of the present invention, the collected luminous energy can be collected efficiently when the lamination condition is bad, For example, a plurality of light voltage battery units is serially connected, and the accumulator battery is charged with little current. Accordingly, when the light voltage battery combination unit is set, the number of light voltage battery units that are to be set inside the light voltage battery combination unit can be determined according to the possible illumination condition, the possible voltage generated by a single light voltage battery unit under this condition, and the output voltage expected by the light voltage battery combination unit.

The above mentioned device for supplying power with light voltage battery provided by embodiment of the present invention can be directly applied to supply electric energy to power consuming devices, or to charge the accumulator battery in a power consuming device.

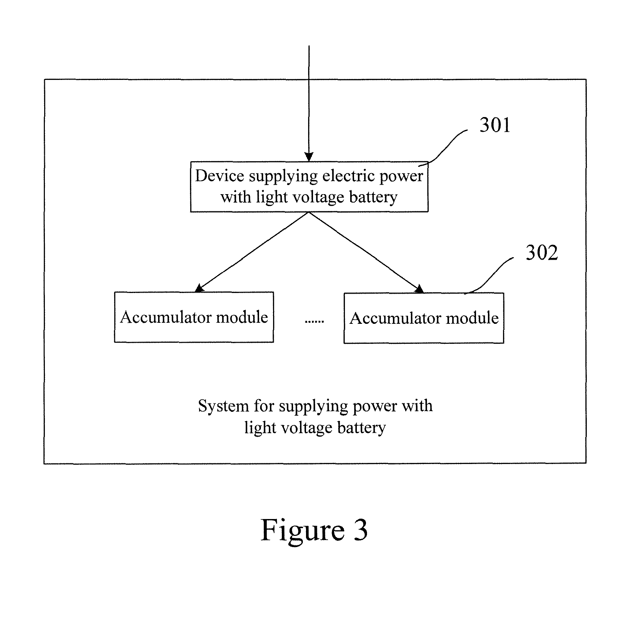

Figure 3 is a diagram illustrating a system for supplying power with light voltage battery provided by embodiment of the present invention. With reference Figure 3, the system includes a device supplying electric power 301, one or more than one accumulator module 302. And the device supplying electric power 301 adopts light voltage battery to supply electric power, and the accumulator module 302 can be symmetrical accumulator battery. The symmetrical accumulator battery receives and stores the electric energy outputted by the device supplying power 301, and includes a plurality of accumulator modules having the same capacity and specification.

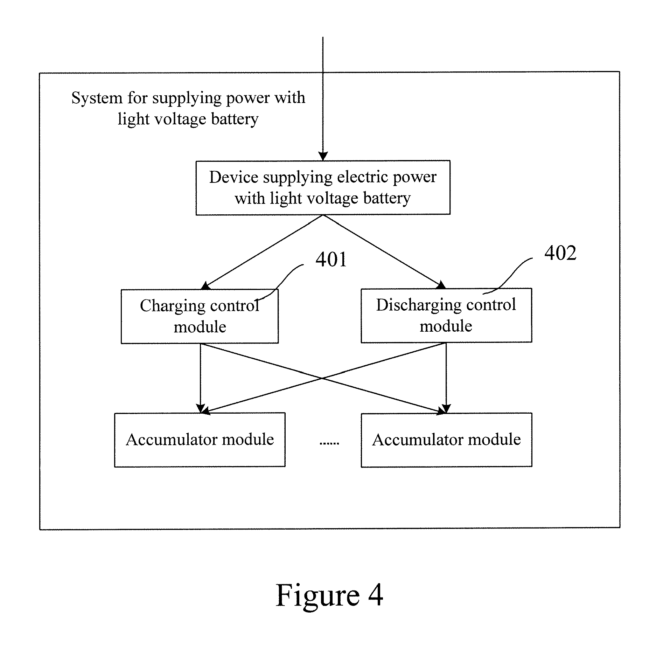

In embodiment of the present invention, in order to optimize the scheme of charging multiple accumulator batteries, it is feasible to set a voltage detector unit and a charging control module in the system. The voltage detector unit may include one or more than one voltage detector, and each voltage detector detects the voltage value of one symmetrical accumulator battery. Figure 4 is a diagram illustrating processes of controlling accumulator module to charge/discharge in a system which utilizes light voltage battery to supply power, in the present invention's embodiment. With reference to Figure 4, a charging control module 401 and a discharging control module 402 are added in the system. The charging control module 401, according to a voltage result of each symmetrical accumulator battery measured by the voltage detector unit, selects a symmetrical accumulator battery to be charged from the multiple symmetrical accumulator batteries. For example, the charging control module can preferentially select the symmetrical accumulator battery with low accumulated voltage. With reference Figure 4, a discharging control module 402 is further set in the system. The discharging control module 402 selects one symmetrical accumulator battery for discharging from the multiple symmetrical accumulator batteries according to the voltage result of each symmetrical accumulator battery provided by the voltage detector unit. For example, the discharging control module 402 can preferentially select the symmetrical accumulator battery with high accumulated voltage. The selecting function of charging control module 401 and that of discharging control module can be implemented via a micro processor and a switch controlled by the micro processor.

Furthermore, embodiments of the present invention also provide a kind of asymmetrical accumulator battery module. This kind of dissymmetrical accumulator battery module includes at least two kinds of accumulator battery with different capacity. And the capacity of one kind of accumulator battery is lower than that of the other kind. For facilitating the description, the kind of accumulator battery with relatively smaller capacity is named as the first accumulator module, while the other kind of accumulator batteries with larger capacities is named as the second accumulator module.

Capacity of the accumulator battery is usually indicated by milliampere/hour (mAH). If the accumulator battery's capacity is 1200 mAH, it means that this accumulator battery can provide 120 mAH current, and can keep supplying such current for 10 hours. When the accumulator battery is charged, time for finishing charging depends on the value of charging current. If an accumulator battery's capacity is 1200 mAH and current charging current is 600 mA, it needs 2.4 hours to finish charging this accumulator battery; with the same charging current, as to an accumulator battery whose capacity is 600 mAH, it needs 1.2 hours to finish charging this accumulator battery. Therefore, with the same charging condition, the smaller the accumulator battery's capacity is, the shorter time is needed to finish charging the accumulator battery.

Common accumulator battery is symmetrical accumulator battery, and the so called symmetrical means that multiple accumulator battery units that constitute this accumulator battery have the same capacity or the same specification. Compared with the existing symmetrical accumulator battery, the symmetrical accumulator battery provided by embodiments of the present invention can choose to charge the first accumulator module preferentially when charging the accumulator batteries, because capacity of the first accumulator module is relatively small. In that way, the first accumulator module can be fully charged in a short time and the power consuming device's requirement for electricity can be satisfied. For example, the asymmetrical accumulator battery is set inside a mobile terminal and, after the first accumulator module is fully charged quickly, it can satisfy the mobile terminal with sufficient electricity to keep power on in time. Especially when light voltage battery is used to charge the asymmetrical accumulator battery in a portable power consuming device, advantage of this asymmetrical accumulator battery is especially outstanding. That is, the first accumulator module is charged quickly by the electricity provided by light voltage battery, so that the basic electricity consumption request of portable power consuming device can be satisfied, and the portable power consuming device is guaranteed to operate normally; and the second accumulator module is charged to store sufficient electricity, which can be used when the portable power consuming device requests for more electricity.

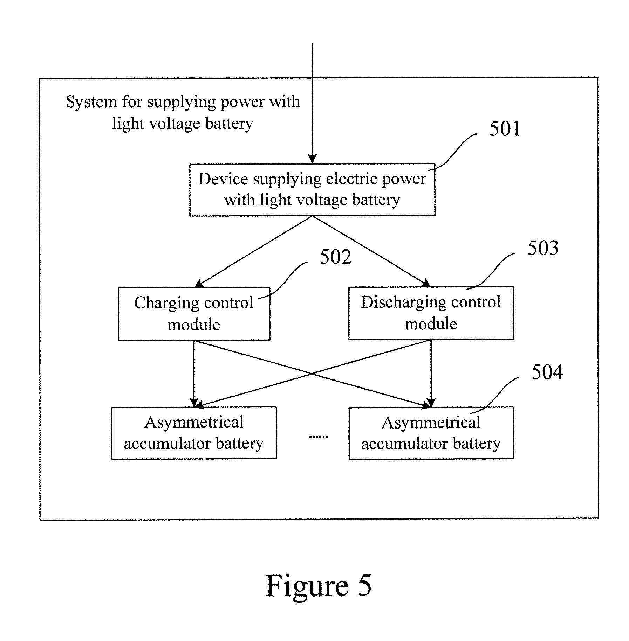

Embodiments of the present invention also provide a system for supplying power with light voltage battery. Figure 5 is a diagram illustrating structure of this system. With reference to Figure 5, this system includes a device supplying electric power 501, one or more than one asymmetrical accumulator battery 504. The device supplying electric power 501 adopts the light voltage battery to supply electric power. Or, the accumulator battery in this system may also be symmetrical accumulator battery. The asymmetrical accumulator battery comprises the first accumulator module and the second accumulator module, and capacity of the first accumulator module is lower than that of the second accumulator module.

In order to optimize the asymmetrical accumulator battery's charging scheme, the system shown in Figure 5 may further include a charging control unit 502. According to a preset charge control strategy, the charging control unit 502 selects the first accumulator module or the second accumulator module, and receives the electricity outputted by the device supplying power 501. The charge control strategy can be to preferentially select the first accumulator module and, after the first accumulator module is fully charged, select the second accumulator module to charge. In practical application, the charge control strategy can be designed according to practical requirement; the charge control strategy is executed by the charging control unit 502.

The system shown in Figure 5 may further include a discharging control unit 503. According to a preset discharge control strategy, the discharging control unit 503 select the first accumulator module or the second accumulator module and provides electricity for the power consuming device that is the process of discharging. For example, the discharge strategy can be to, when amount of the consumed electricity is less than the preset value, select the first accumulator module; when amount of the consumed electricity is more than the preset value, select the second accumulator module.

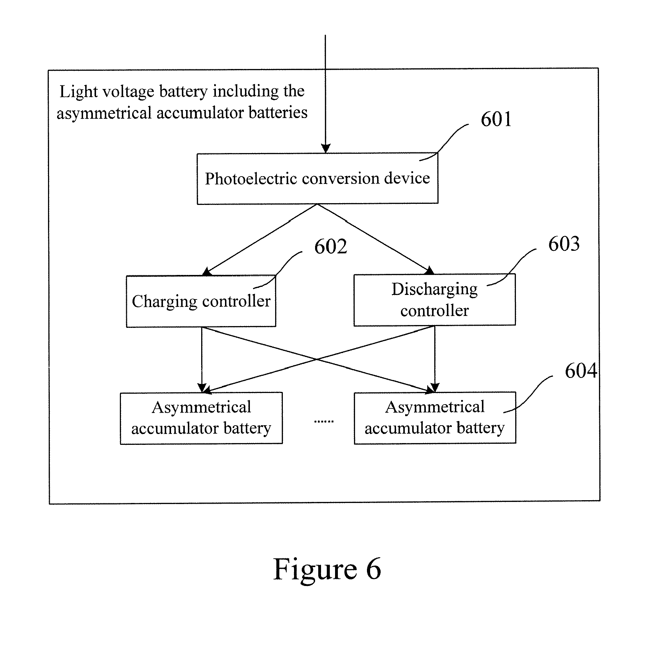

Embodiments of the present invention also provides a kind of light voltage battery including the asymmetrical accumulator batteries, And the light voltage battery provided by embodiments of the present invention is called the first light voltage battery. Structure of the first light voltage battery is similar to that of the system shown in Figure 5. Figure 6 illustrates structure of the first light voltage battery. With reference to Figure 6, the first light voltage battery includes a photoelectric conversion device 601, a charging controller 602, a discharging controller 603, and one or more than one asymmetrical accumulator battery 604. The photoelectric conversion device 601 can be the above mentioned device supplying electric power 501, or the photoelectric conversion device 601 can be a common light voltage battery or a battery group. Function of the charging controller 602 is the same as that of the charging control unit 502. While function of the discharging controller 603 is the same as that of the discharging control unit 503.

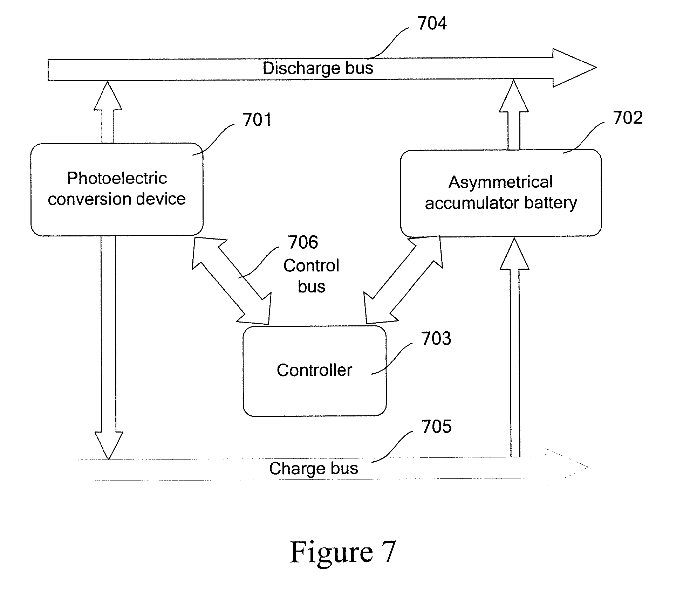

Figure 7 is a diagram illustrating embodiment of the first light voltage battery. With reference to Figure 7, the first light voltage battery includes a photoelectric conversion device 701 and an asymmetrical accumulator battery 702 connected by discharge bus 704 and charge bus 705. And a controller 703 is respectively connected to the photoelectric conversion device 701 and the asymmetrical accumulator battery 702 via the control bus 706. For a charging controller, it controls the first or second accumulator module to connect to the charge bus 705 based on a preset charge control strategy. And for a discharging controller, it controls the first or second accumulator module to connect to the discharge bus 704 based on a preset discharge control strategy.

In addition, as to asymmetrical accumulator battery in embodiment of the present invention, capacity of the first accumulator module is set as two-third of that of the second accumulator module, which guarantees that the time for charging the first accumulator module is as short as possible.

In embodiment of the present invention, the light voltage battery including asymmetrical accumulator batteries can be made according to the following aspects.

The first aspect: for different power consuming devices, capacity of the selected first accumulator module should be able to meet the power consuming device's normal operation request.

The second aspect: capacity, appearance and other features of the selected first accumulator module need to match the light voltage battery's design.

The third aspect: in order to decrease cost, the mass-produced standard battery unit that is available on the market can be selected as the first accumulator module.

In embodiments of the present invention, the first light voltage battery can be used in portable electrical devices to supply power. The portable electrical devices mainly include a mobile phone, an interphone, a digital camera, a Personal Digital Assistant (PDA), an electric book, a digital video, a notebook computer and so on.

Several embodiments will be given to illustrate the above mentioned technical scheme provided by the present invention.

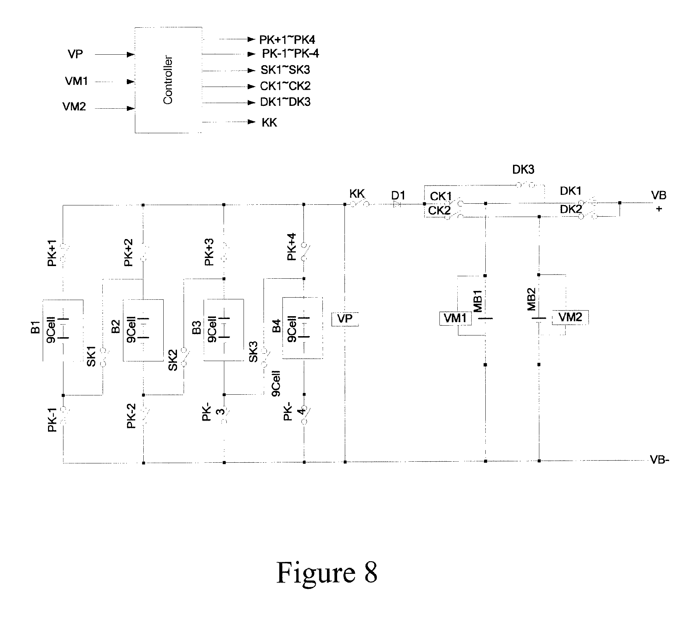

Figure 8 is a diagram illustrating circuit for the device, which utilizes light voltage battery to supply power, to charge the accumulator battery in an embodiment of the present invention. In the circuit shown in Figure 8, a light voltage battery combination unit includes four light voltage battery units which are B1 to B4. And each light voltage battery unit is composed of nine light voltage batteries, it is supposed that the light voltage threshold of each light voltage battery is 0.5 volt; accordingly the maximum light voltage value of each light voltage battery unit can be 4.5 volts. A measure unit is voltage detector (VP), a control unit can be a micro processor that can be used to control a plurality of programmed switches: PK+1~PK+4, PK-1~PK-4, SK1~SK3 and KK. An accumulator battery includes two groups of lithium battery groups MB1 and MB2, and it is supposed that full charge voltage of each lithium battery is 4.2V. There is an anti adverse current diode (D1) between the accumulator battery and the device supplying power. In practical application, although the illumination condition may not be changed a lot, the working light voltage outputted by the light voltage battery combination unit may be instable. In this situation, the anti adverse current diode can be used to avoid a current bounce-back from accumulator module to light voltage battery combination unit. The measure unit is two lithium voltage detectors: VM1 detecting MB1's voltage and VM2 detecting MB2's voltage. Function of the charging control module and that of the discharging control module can be integrated into the above-mentioned control unit, which can control the on/off of CK1~CK2 and DK1~DK3.

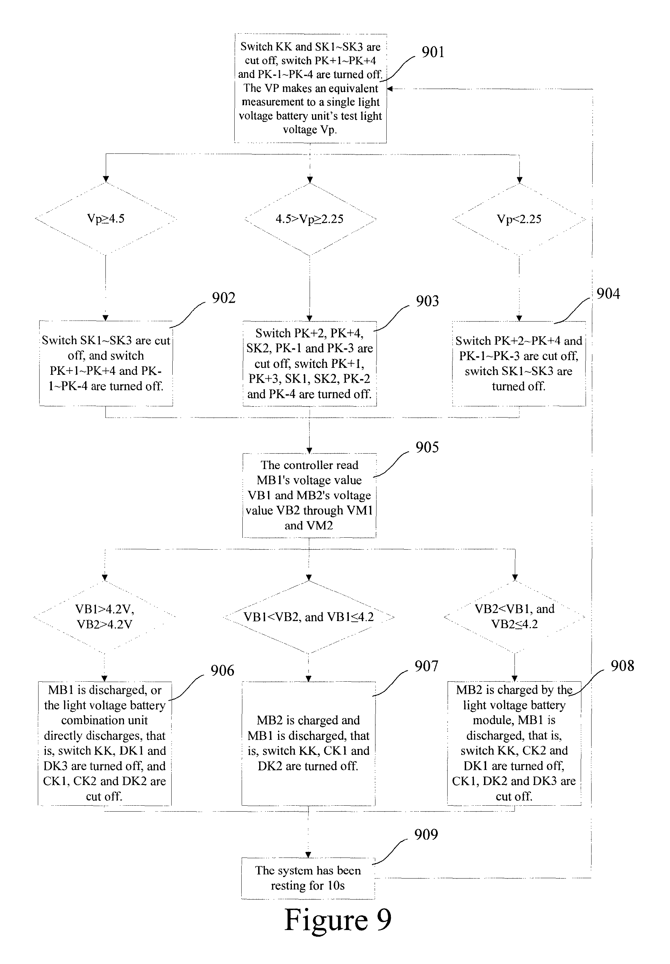

Figure 9 is a flowchart illustrating the process of charging the accumulator battery in the embodiment mentioned in the Figure 8. With reference to Figure 9, this process includes the following processes in detail.

According to processes in block 901, switch KK and SK1~SK3 are cut off, switch PK+1~PK+4 and PK-1~PK-4 are turned off. The VP makes an equivalent measurement to a single light voltage battery unit's test light voltage Vp. According to a connection strategy, if Vp≥4.5V, processes in block 902 are performed; ifVp<4.5V and Vp≥2.25V, processes in block 903 are performed; if Vp<2.25V, processes in block 904 are performed.

According to processes in block 902, all the light voltage battery units are connected in parallel, that is, switch SK1~SK3 are cut off, and switch PK+1~PK+4 and PK-1~PK-4 are turned off, and then processes in block 905 are performed.

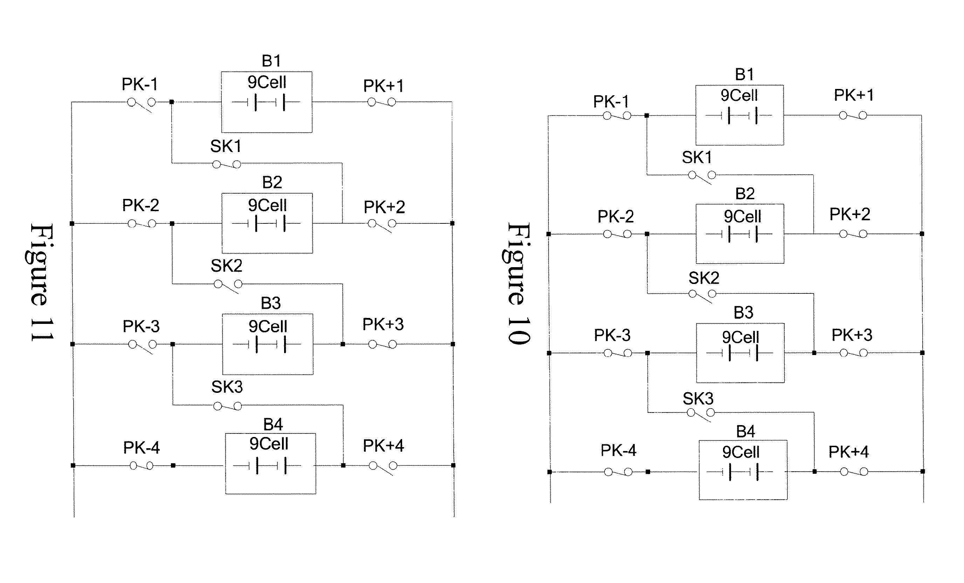

Figure 10 is a diagram illustrating parallel circuit of four light voltage battery units in the light voltage battery unit in embodiment shown in the Figure 8.

According to processes in block 903, a serial-parallel connection manner is used to connect all the light voltage battery units, that is, switch PK+2, PK+4, SK2, PK-1 and PK-3 are cut off, switch PK+1, PK+3, SK1, SK2, PK-2 and PK-4 are turned off; processes in block 905 are performed.

Figure 11 is a diagram illustrating the serial-parallel circuit of four light voltage battery units in the light voltage battery unit in embodiment shown in the Figure 8.

According to processes in block 904, the four light voltage battery units are connected in serial, that is switch PK+2~PK+4 and PK-1~PK-3 are cut off, switch SKI~SK3 are turned off; then processes in block 905 are performed.

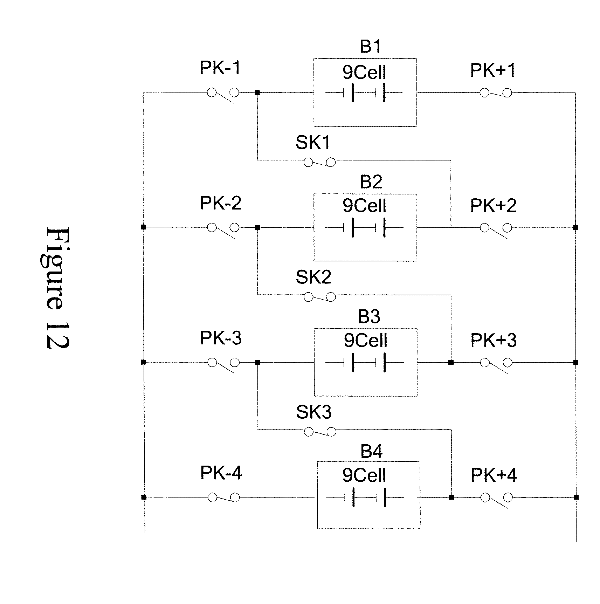

Figure 12 is a diagram illustrating the serial circuit of four light voltage battery units in the light voltage battery unit in embodiment shown in the Figure 8.

According to processes in block 905, the controller read MB1's voltage value VB1 and MB2's voltage value VB2 through VM1 and VM2, if VB1>4.2V and VB2>4.2V, the lithium battery group is in full-electricity status and need not be charged, processes in block 906 are performed; if VBI<VB2 and VB1≤4.2V, MB1 is charged and MB2 is discharged, and processes in block 907 are performed; if VB2<VB1 and VB2≤4.2V, select MB2 is charged and MB1 is discharged, and processes in block 908 are performed.

According to processes in block 906, the lithium battery group is in full electricity status, so MB1 is discharged, or the light voltage battery combination unit directly discharges, that is, switch KK, DK1 and DK3 are turned off, and CK1, CK2 and DK2 are cut off; and processes in block 909 are performed.

According to processes in block 907, MB2 is charged and MB 1 is discharged, that is, switch KK, CK1 and DK2 are turned off, CK2, DK1 and DK3 are cut off; processes in block 909 are performed.

According to processes in block 908, MB2 is charged by the light voltage battery module, MB1 is discharged, that is, switch KK, CK2 and DK1 are turned off, CK1, DK2 and DK3 are cut off; processes in block 909 are performed.

According to processes in block 909, after a period of time, if the system has been resting for 10s, processes in block 909 are performed.

Processes in block 909 will not affect the charging of MB1 or MB2, and the returning back to the processes in block 901 can real-timely monitor current illumination condition, adaptively change the connection manner among multiple light voltage battery units, and meet charging requests under different illumination conditions.

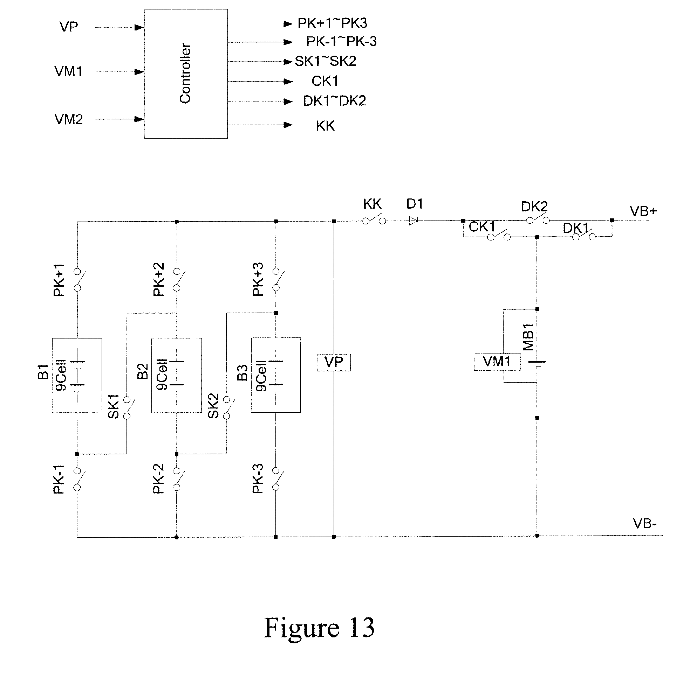

Figure 13 is a diagram illustrating circuit for the device, which utilizes light voltage battery to supply power, to charge the accumulator battery in another embodiment of the present invention. Different from the circuit shown in Figure 8, the light voltage battery combination unit shown in Figure 13 includes three light voltage battery units: B1 to B3; the switches that control units needs to control include: PK+1~PK+3, PK-1~PK-3, SK1~SK2 and KK. There is one accumulator battery, namely the lithium battery group MB1. Battery voltage detector VM1 detects MB1's voltage. The charging control module and discharging control module control the switches as follows: CK1 and DK1~DK2. Functions of the control unit, the charging control module and discharging control module can be integrated in one micro processor.

When number of light voltage battery units is two or three, connection manners of multiple light voltage battery units can be serial connection and parallel connection.

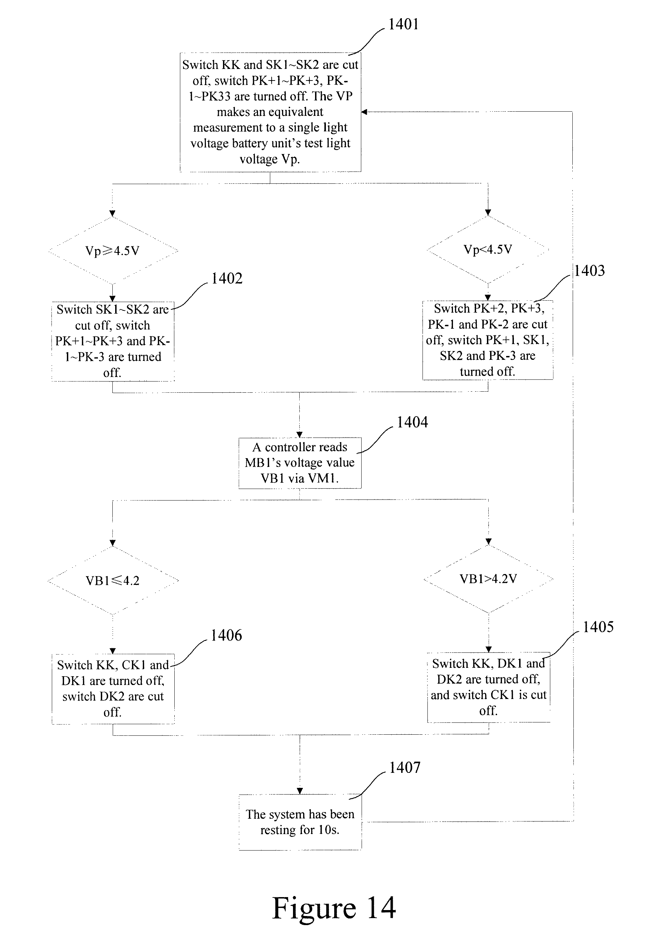

Figure 14 is a flowchart illustrating process of charging the accumulator battery in embodiment shown in Figure 13. The process of charging the accumulator battery includes the following processes in detail.

According to processes in block 1401, switch KK and SK1~SK2 are cut off, switch PK+1~PK+3, PK-1~PK33 are turned off. The VP makes an equivalent measurement to a single light voltage battery unit's test light voltage Vp. According to a connection strategy, if Vp≥4.5V, processes in block 1402 are performed; if Vp<4.5V, processes in block 1403 are performed.

According to processes in block 1402, all the light voltage battery units are connected in parallel, that is, switch SK1~SK2 are cut off, switch PK+1~PK+3 and PK-~1-PK-3 are turned off, processes in block 1404 are performed.

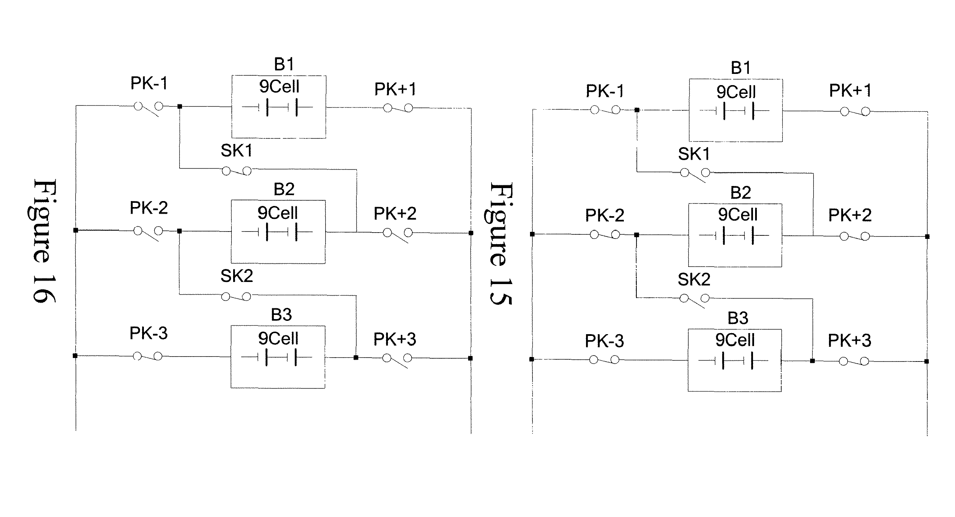

Figure 15 is a diagram illustrating parallel circuit of three light voltage battery units in the light voltage battery unit in embodiment shown in the Figure 13.

According to processes in block 1403, all the light voltage battery units are connected in serial, that is, switch PK+2, PK+3, PK-1 and PK-2 are cut off, switch PK+1, SK1, SK2 and PK-3 are turned off, then processes in block 1404 are performed.

Figure 16 is a diagram illustrating serial circuit of three light voltage battery units in the light voltage battery unit in the embodiment shown in Figure 13.

According to processes in block 1404, a controller reads MB1's voltage value VB1 via VM1; if VB1>4.2V, MB1 is in full electricity status and need not be charged, processes in block 1405 are performed; if VB1≤2V, MB1 is charged and discharged at the same time, processes in block 1406 are performed.

According to processes in block 1405, the MB 1 is in full electricity status, and the MB1 is discharged, light voltage battery combination unit is directly discharged, that is, switch KK, DK1 and DK2 are turned off, and switch CK1 is cut off, then processes in block 1408 are performed.

According to processes in block 1406, the MB1 is charged and discharged, that is, switch KK, CK1 and DK1 are turned off, switch DK2 are cut off, then processes in block 1407 are performed.

According to processes in block 1407, after a period of time, if the system has been resting for 10s, processes in block 1401 are performed.

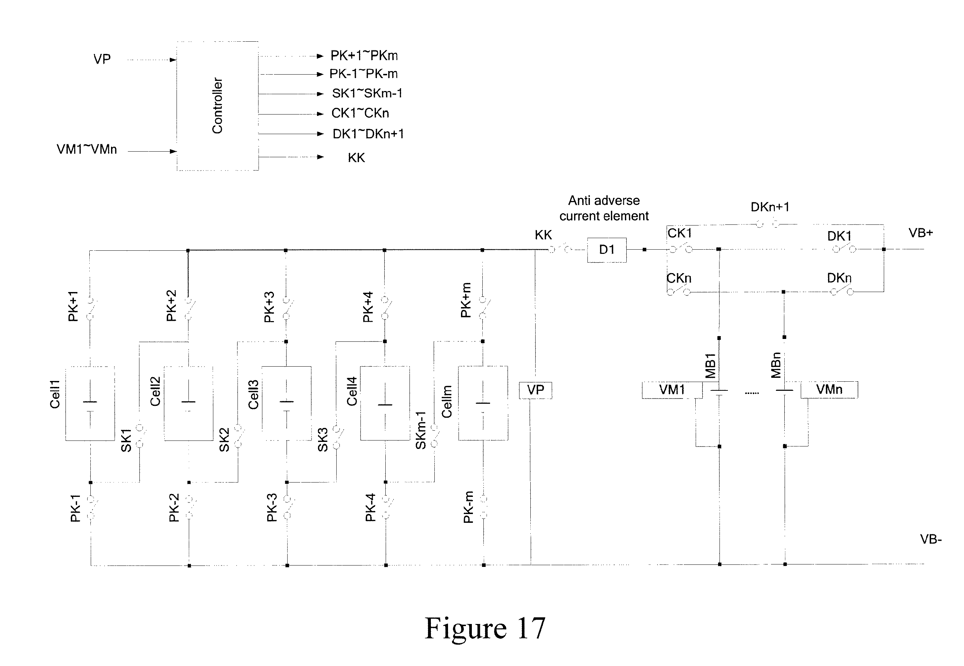

Figure 17 is a diagram illustrating circuit for the device, which utilizes light voltage battery to supply power, to charge the accumulator battery in another embodiment of the present invention. In this circuit, the light voltage battery combination unit includes m light voltage battery units, and each light voltage battery unit includes z light voltage batteries. And the number z is larger than or equivalent to two. The light voltage battery combination unit includes a light voltage battery unit's voltage detector, VP; and also includes a controller integrating functions of the control unit, the charging control module and the discharging control module. And the switches controlled by the controller include: PK+1~PK+m, PK-1~PK-m, SK1~SKm-1, CK1~CKm, DK1~DKm-1 and KK. In addition, in this circuit, each lithium battery group's full charge voltage is Vb and each light voltage battery unit's light voltage threshold is Vp.

With reference to Figure 17, the charging process in which number of light voltage battery units in light voltage battery combination unit is an integer m is illustrated, wherein m ≥ 4. Under a good illumination condition, the m light voltage battery units are connected in parallel, so as to get the maximum output of charging current and discharge externally, so that the accumulator module can be charged. Under an average illumination condition, the m light voltage battery units are connected in serial-parallel mixed manner. For example, x light voltage battery units are connected serially to form y serial connection groups, and the number x is an integer that is less than or equivalent to m/2. And y serial groups can also be connected to charge the accumulator module with a large current, the number y is an integer calculated by rounding down m/2 to the nearest integer. Under a bad illumination condition, the m light voltage battery units are connected in serial, so as to charge accumulator module with small current.

If c light voltage battery units constitute d serial connection groups and the d serial connection groups connects to one another in parallel manner, the relation among a, Vp, Vb, c and d is as follows.
c = Vb/Vp, wherein c is an integer calculated by rounding up to the nearest integer of Vb/Vp;
d = z/c, wherein d is an integer calculated by rounding down to the nearest integer of z/c.

When every accumulator battery's voltage is higher than or equivalent to full charge voltage, the accumulator battery is in full electricity status, and there is no need to charge the accumulator battery any longer. The discharging control module selects any accumulator battery to discharge, or the light voltage battery combination unit can also directly discharge externally.

When voltages of multiple accumulator batteries are lower than the full charge voltage, it is needed to charge the accumulator batteries, the accumulator battery with the lowest voltage is selected preferentially to be charged, then other accumulator batteries will be charged in order; and the accumulator battery with the highest voltage is discharged. If there is only one accumulator battery, when voltage of the accumulator battery is lower than full charge voltage, the accumulator battery can be charged and discharged at the same time, in order to supply power for the power consuming devices.

With reference to accompanying drawings, the process of charging asymmetrical accumulator battery with the electric energy, which is outputted by the device utilizing light voltage battery to supply power, will be described hereinafter. For the device utilizing light voltage battery to supply power, the control unit can adaptively adjusts connection manner of multiple light voltage battery units according to result of the measure unit, which is mentioned in Figure 9 and Figure 14, and not to be illustrated hereby anymore.

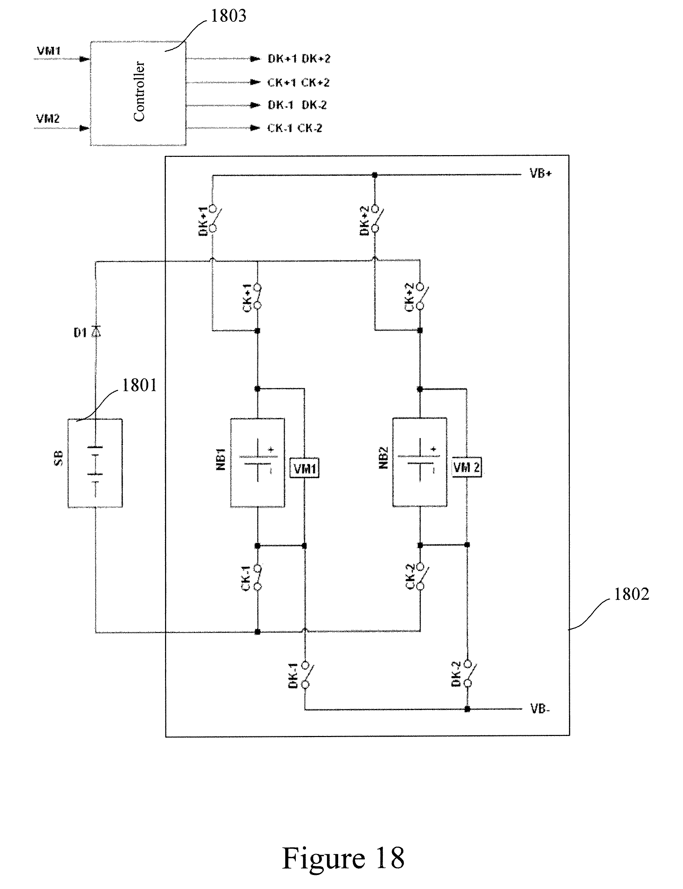

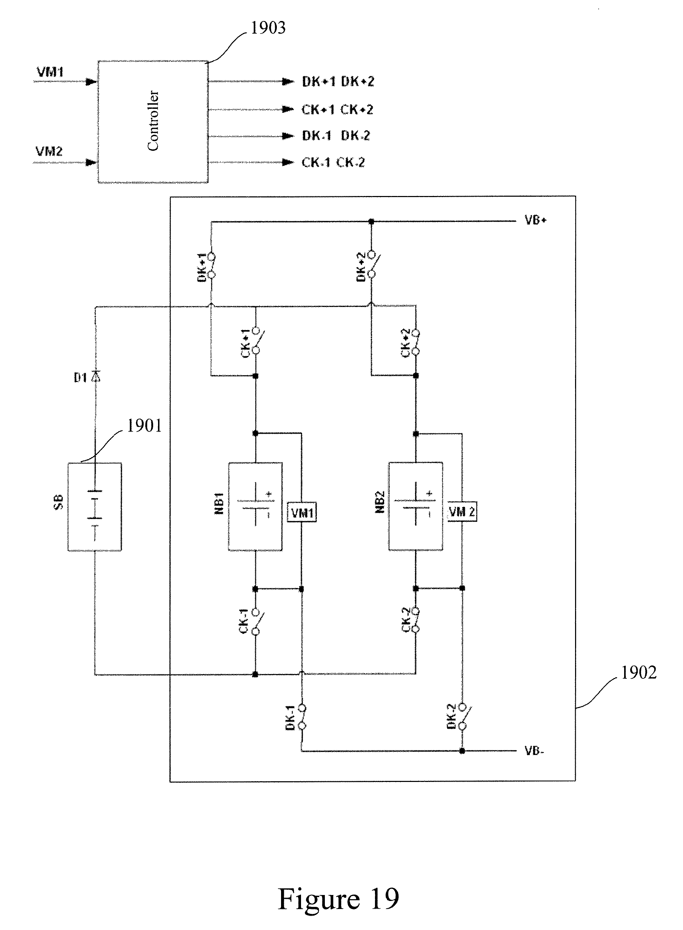

Figure 18 and Figure 19 are diagrams illustrating circuits for the device, which utilizes light voltage battery to supply power, to charge the asymmetrical accumulator battery in an embodiment of the present invention. In the circuit shown in Figure 18, SB 1801 is the device utilizing light voltage battery to supply power. The asymmetrical accumulator battery group 1802 is composed of two lithium batteries NB1 and NB2 whose full charge voltage are 4.2V. Capacity of the first accumulator module NB1 is 250mAH, while capacity of the second accumulator module is 650mAH. Voltages of NB1 and NB2 are respectively VM1 and VM2.

With reference to Figure 18 and Figure 19, the controller 1803 in the embodiment of the present invention may include a micro processor and switches controlled by the micro processor. The micro processor can be a low power consumption multiple Analogy/Digital Converter (ADC) or a PIC18L single chip microcomputer and so on. Input signals of the controller are NB1's and NB2's voltage signals VM1 and VM2, while output signals are on/off signals of DK-1, DK-2, DK+1, DK+2, CK+1, CK+2, CK-1, CK-2, which are used to control on/off status of the switches. Switches of the embodiment can be low power consumption CMOS diodes.

Besides, there is a protection circuit, namely a schottky diode D1, set between the SB 1801 and the asymmetrical accumulator battery group 1802. The schottky diode D1 is used to avoid over charging current, over voltage, over current, over heating and reverse current during the charging process. In practical application, such protection circuit can also be set between NB1 and SB 1801 or between SB 1801 and NB2.

With reference to Figure 18, the controller 1803 periodically monitors VM1 and VM2 detected by the voltage detector. When both VM1 and VM2 are lower than switch voltage of the power consuming device, the controller 1803 turns off switch CK+1 and CK-1, cuts off other switches, preferentially charges the NB1 and keeps the NB2 in waiting state. As far as the user is concerned, this is right the time to deal with an emergency, to quickly start the mobile phone, computer and other electrical devices, which are already out of power. By charging NB1 preferentially, the power needed to start the device can be acquired as soon as possible.

With reference to Figure 19, when the voltage detector detects that NB1's voltage VM1 has reached a voltage value to start up a device, the controller 1903 turns off switch DK+1, DK-1, CK+2 and CK-2, and cuts off other switches; then the NB1 in the asymmetrical accumulator battery group 1902 is discharged, and the SB 1901 charges the NB2 in the asymmetrical accumulator battery group 1902.

Particular innovation of the present invention makes it possible to, when there isn't any external power supply other than illumination energy, utilize luminous energy to selectively charge the solar energy accumulator battery that cannot reach the voltage to start up the device. Only small-capacity accumulator battery, which is in solar energy batteries of asymmetrical accumulator battery group, is selected to charge. While in other light voltage battery charging methods, a large-capacity accumulator battery unit or a whole battery group is needed to be charged. Therefore, the present invention can implement a fast charging to small-capacity accumulator battery unit, so that when the device is totally out of power, the user can use solar energy to charge the device, start up the device quickly and use the device.

In the above mentioned embodiment, only the asymmetrical accumulator battery of a first accumulator module and that of a second accumulator module is taken into consideration. In practical application, the above mentioned embodiment is also applicable to a combination of a large-capacity accumulator battery unit and a small-capacity accumulator battery unit. The working principle is generally the same, for example, when all accumulator batteries are out of power, the controller preferentially makes small-capacity accumulator battery unit being charged.

In the above mentioned embodiment, there can be various different schemes of charge strategy/order and discharge strategy/order for several or all batteries to reach power-on voltage. And when a basic principle of the present invention is satisfied, relevant circuits can have numberless combinations, transforms and optimized schemes, and relevant device selections are also variable.

In the above mentioned embodiments and the accompanying drawings Figure 8 to Figure 19, the specific implementing ways of charging accumulator batteries with the device supplying power with light voltage battery. In practical application, the charge/discharge circuits can be designed, and relevant devices can be selected otherwise.

Besides, embodiments of the present invention also provide a kind of light voltage battery, which is composed of at least two kinds of photoelectric materials, and one of the two photoelectric materials is polynary compound photoelectric material. The light voltage battery is named as the second light voltage battery hereinafter. In the above mentioned device utilizing light voltage battery to supply power, the second light voltage battery also can be used in the light voltage battery units in the light voltage battery combination unit.

At present, popular photoelectric materials that can be used to make light voltage battery include silicon material, polynary compound and so on. And the polynary compound photoelectric materials include GaAs, InP, SiC, GaN and so on; the silicon materials include monocrystalline silicon, poly crystal silicon, amorphous silicon, nano crystal and so on. Compared with other photoelectric materials like silicon materials, polynary compound photoelectric materials have better photo-electric conversion performance.

In terms of photoelectric conversion efficiency, it is confirmed that, under the standard illumination intensity, polynary compound photoelectric material has the highest photoelectric conversion efficiency, which can be as high as 24.88%. But for other photoelectric materials, for example, monocrystalline silicon's photoelectric conversion efficiency is 16%; amorphous silicon's photoelectric conversion efficiency is 9.3%.

In terms of the effective voltage generated by photoelectric materials from luminous energy, comparing with photoelectric materials like silicon material, the polynary compound photoelectric material is also advantageous. For example, under the standard illumination intensity, when light absorption effective area of GaAs is 1190 mm², working voltage of GaAs can be as high as 2.298V. While for monocrystalline silicon and poly crystal silicon, under the standard illumination intensity, when light absorption effective area is 15625 mm2, the working voltage can only reach 0.508V.

In terms of ability of photoelectric material absorbing light to generate working voltage, comparing with other photoelectric materials like silicon material, the polynary compound photoelectric material's ability of absorbing light to generate working voltage is not influenced greatly by light intensity change. For example, when light intensity changes from weak to intense, the light voltage battery made from polynary compound photoelectric material can generate more stable working voltage than that generated by other photoelectric materials. With this advantage, light voltage battery made from polynary compound photoelectric material can provide more stable working voltage for power consuming device, which ensures the power consuming device's stable operation.

Due to the better photoelectric conversion performance, the polynary compound photoelectric material's price has always been high, so the polynary compound photoelectric material has not been widely applied. The existing light voltage battery is usually made from silicon material. With the influence of photoelectric material, the existing light voltage battery can neither make good or full use of solar energy, nor provide stable working voltage for the power consuming devices.

With good cost-effective feature, the second light voltage battery provided in embodiment of the present invention can make full use of solar energy and, based on small light voltage battery board area, and provide stable working voltage for the power consuming devices.

The second light voltage battery can converse the solar energy received at an input end into electric energy, and output the electric energy via an output end. The second light voltage battery provided in embodiment of the present invention includes two kinds of light voltage battery modules. One of the two kinds of light voltage battery module is made from polynary compound photoelectric material whose photoelectric conversion efficiency is higher than that of silicon materials. The other kind of light voltage battery module is made from photoelectric materials other than the polynary compound photoelectric material. The light voltage battery module made from polynary compound photoelectric material may include one piece or multiple pieces of light voltage battery board made from polynary compound photoelectric material. The polynary compound photoelectric material is a kind of photoelectric material composed of multiple elements, like the above-mentioned GaAs, InP, SiC, GaN and so on. Other photoelectric materials can be biological solar energy materials, various silicon materials, nano crystals and so on. Moreover, with the development of material science, other similar polynary compound photoelectric materials may also appear.

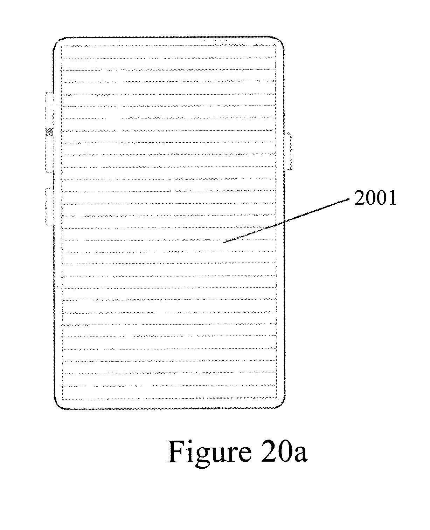

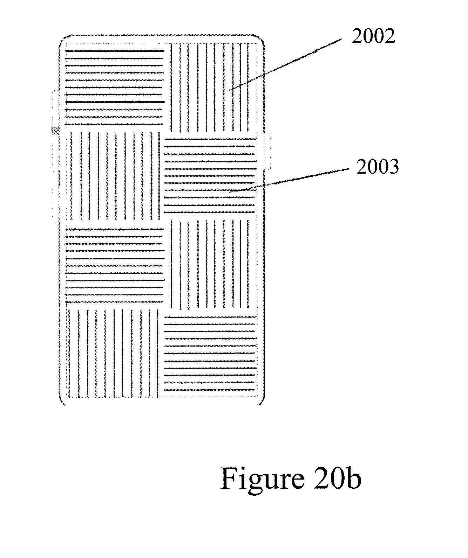

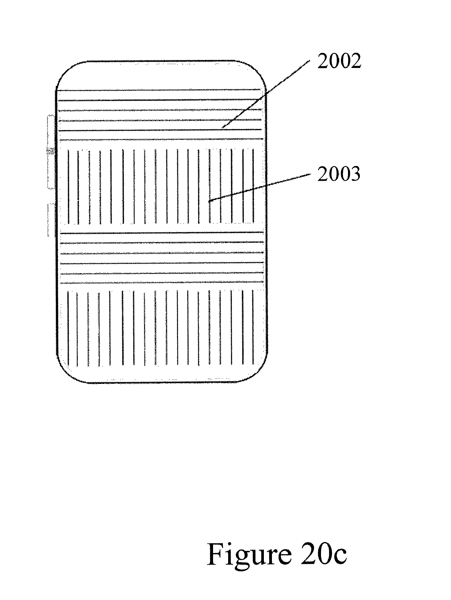

Figure 20a is a diagram illustrating an embodiment in which the second light voltage battery 2001 is applied in a mobile terminal. Figure 20b is a diagram illustrating another embodiment in which the second light voltage battery 2001 is applied in the mobile terminal. Figure 20c is a diagram illustrating another embodiment in which the second light voltage battery 2001 is applied in the mobile terminal. For facilitating the description, one or more than one light voltage battery board made from polynary compound photoelectric materials are called the first battery board 2002; while one or more than one light voltage battery board made from other photoelectric materials are called the second battery board 2003.

In practical application, it is applicable to configure a fixed-area light voltage battery board with a relatively smaller-area first battery board and a relatively larger-area second battery board. The light voltage battery board, on one hand, can take use of polynary compound photoelectric material's outstanding photoelectric conversion performance and, on the other hand, may bring down cost of the light voltage battery board. By this way, with a proper basic price, the designed light voltage battery board can make full use of solar energy, and provide stable working voltage for the power consuming devices. For example, as to a mobile terminal, a digital camera, an interphone, a Personal Digital Assistant (PDA), an electric book, a digital video, a portable computer, an audio/video player and other portable power consuming devices, because there is a limited area for placing the light voltage battery board, the second light voltage battery 2001 provided by embodiment of the present invention is especially fit to used in a portable electrical devices. The first battery board 2002 is placed in a small-area, which can get higher photoelectric conversion efficiency and stable voltage.

There are usually vertical and horizontal textures on surface of the light voltage battery board. With reference to Figure 20a, in a design of mobile terminal, the first battery board 2002 and the second battery board 2003 are placed upon the mobile terminal along the same line direction. While in Figure 20b and Figure 20c, the first battery board 2002 and second battery board 2003 are placed upon the mobile terminal along vertical line directions. In practical application, the first battery board 2002 and second battery board 2003 can be placed in other handsome patterns.

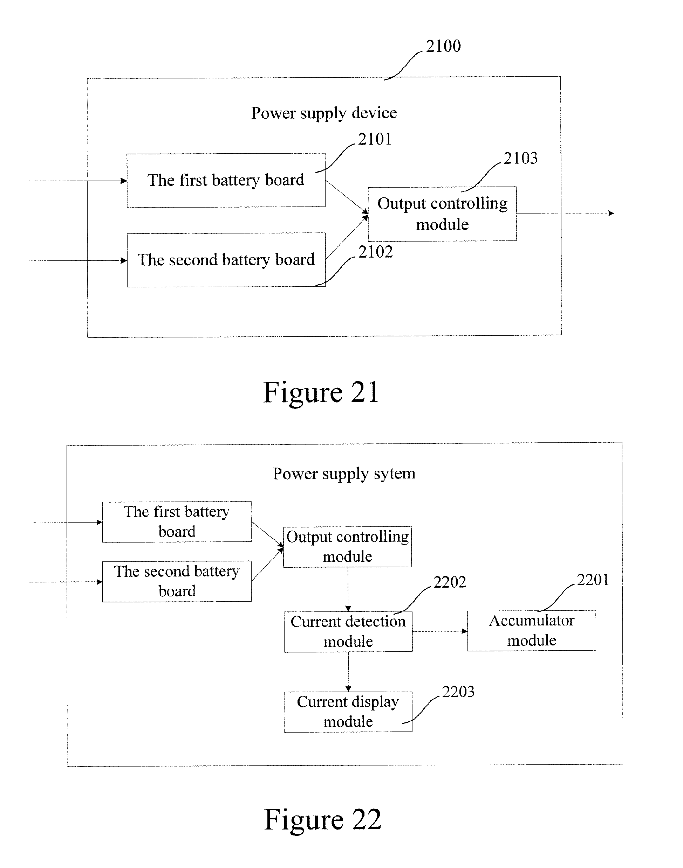

In embodiment of the present invention, the second light voltage battery 2001 can be used in the above mentioned device utilizing light voltage battery to supply power. In practical application, if the above mentioned device utilizing light voltage battery to supply power is not used, an alternative choice is to adopt the power supply device further provided by embodiment of the present invention, which can utilize the above mentioned second light voltage battery, to supply power for power consuming devices. Figure 21 is a diagram illustrating structure of a power supply device in the present invention's embodiment. With reference to Figure 21, the power supply device 2100 includes a first battery board 2101 made from the polynary compound photoelectric material, a second battery board 2102 made from other photoelectric materials, and an output controlling module 2103. An input end of the output controlling module 2103 is connected to an output end of the first battery board 2101; and the input end of the output controlling module 2103 is also connected to the output end of the second battery board 2102. The electric energy output by each kind of light voltage battery module is adjusted to a preset voltage value and then outputted from the output controlling module 2103.

Based on the above-mentioned power supply device, a power supply system is also provided in embodiment of the present invention. Figure 22 is a diagram illustrating structure of the system. With reference to Figure 22, the power supply system includes a power supply device same as the power supply device shown in Figure 21 and an accumulator module 2201. Rated voltage of the accumulator module 2201 is larger than or equivalent to the above-mentioned preset voltage value. The input end of the accumulator module 2201 is connected to the output end of the output controlling module. The accumulator module 2201 receives and stores electric energy outputted by the output controlling module. This power supply system can be set in a power consuming device. And the accumulator module 2201 works as the accumulator of the power consuming device. When the power supply device is located in a luminous environment, the accumulator starts the charging.

The system shown in Figure 22 may further include a current detection module 2202 and a current display module 2203. And input end of the current detection module 2202 is connected to output end of the output controlling module. Output end of the current detection module 2202 is connected to the input end of the accumulator module 2201. The current detection module 2202 can detect charging current generated from the electric energy which is outputted by the output controlling module and received by accumulator module, and then output the detected charging current from its output end. Input end of the current display module is connected to output end of the current detection module 2202. Value of the charging current outputted by current detection module is displayed on the current display module 2203. This current display module 2203 shows value of the charging current to the user via a display device on the power consuming device, such as a LED display screen, an electric value screen, a signal light and so on. In this way, the user can acquire in time the accumulator battery's charging status under the current illumination condition and, according to the current power consumption situation of the power consuming device, adjust whether to put the power consuming device inside an environment with better illumination condition. So the light voltage battery board can get sufficient light to supply power for the power consuming device.

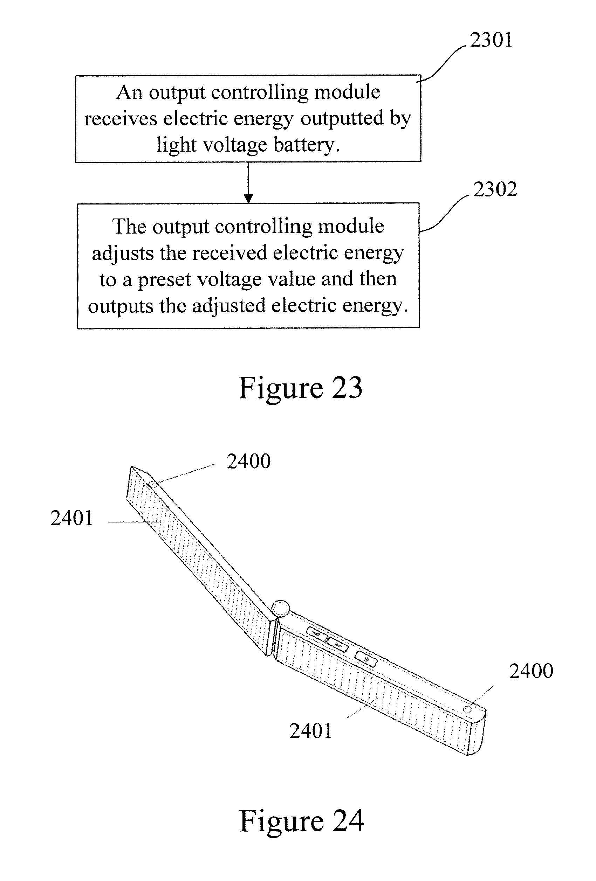

Figure 23 is a flowchart illustrating a power supply method provided by embodiment of the present invention. With reference to Figure 23, the power supply method includes the following processes.

According to processes in block 2301, an output controlling module receives electric energy outputted by light voltage battery.

This light voltage battery is the second light voltage battery 2001, provided in embodiment of the present invention, that includes the first battery board 2101 and second battery board 2102.

According to processes in block 2302, the output controlling module adjusts the received electric energy to a preset voltage value and then outputs the adjusted electric energy.

The above-mentioned technical scheme provided in embodiment of the present invention will be illustrated hereinafter with reference to specific embodiments.

Figure 24 is a diagram illustrating a clamshell mobile phone that is configured with the above mentioned power supply system illustrated in the embodiment of the present invention. It can be seen from Figure 24 that light voltage board 2401 is set inside this mobile terminal's front panel and rear panel. In practical application, position of the light voltage board 2401 can be decided according to the mobile terminal's practical need. Preferably, the light voltage board 2401 can be set exposed to sunlight. Besides, Figure 24 only shows one layout pattern of a first battery board and a second battery board of the light voltage board 2401, in practical application, other layout patterns of the light voltage board 2401 also can be configured in the mobile phone. The current display end 2400 is a signal light displaying the current generated by the light voltage board 2401.

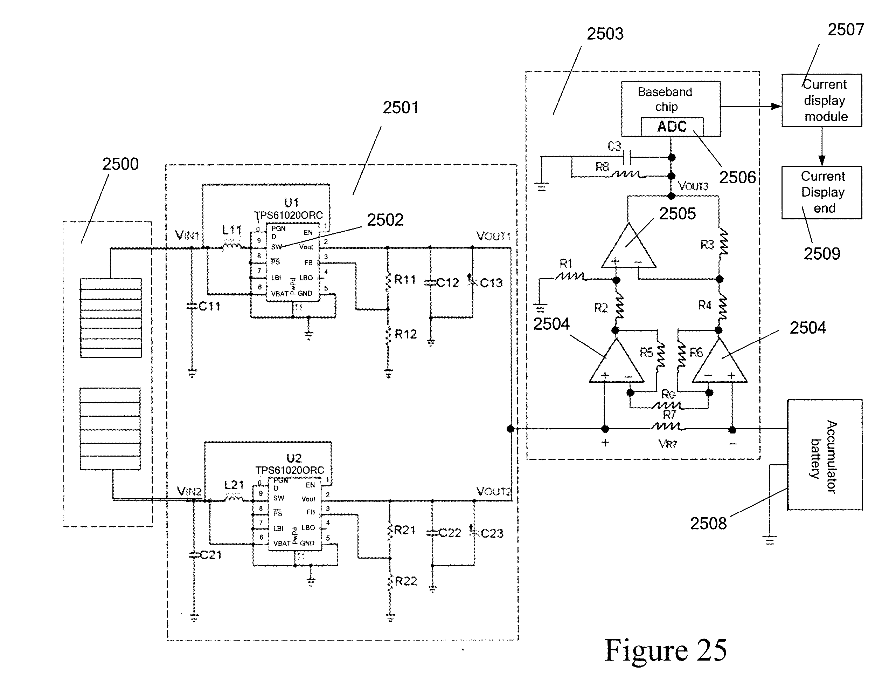

Figure 25 is a diagram illustrating a working circuit of the power supply system configured in the mobile phone shown in Figure 24. In this embodiment, the second battery board is made from other photoelectric materials like silicon material. This working circuit may also be called light voltage battery working circuit. With reference to Figure 25, in this working circuit, an output controlling module 2501 includes two sets of output controlling circuits. One set of output controlling circuit is used to adjust the first battery board's output voltage and is shortened as the first circuit; the other set of output control circuit is used to adjust the second battery board's output voltage and is shortened as the second circuit. Design of the first circuit is similar to that of the second circuit, therefore, only the first battery board's first circuit will be taken for example to illustrate the process of output controlling module's adjusting light voltage battery's output voltage.

With reference to Figure 25, the first circuit's input end is connected to the first battery board's output end, after electric energy outputted by the first battery board is introduced to the first circuit, the first circuit will adjust the introduced electric energy to a preset voltage value, which is not more than rated voltage of an accumulator battery 2508. The first circuit includes a kernel DC/DC chip 2502, the first circuit's input end is connected to inductor L11's input end and to capacitor C11's input end. Capacitor C11's output end is grounded, and C11 adjusts the electric energy introduced by the first circuit to Vin1. Inductor L11's output end is connected to the kernel DC/DC chip 2502's pin 9, and the kernel DC/DC chip 2502's pin 2 is connected to load capacitor C12's input end, the load capacitor C12's output end is grounded. The kernel DC/DC chip 2502's pin 2 is connected to the accumulator battery 2508's input end, and the voltage outputted by the first circuit's output end is VOUT1.

The process of the first circuit's charging the accumulator battery 2508 is as follows.

Firstly, various kinds of solar energy photoelectric conversion materials, which are on light voltage battery board 2500, absorb the sunlight, and converse solar energy into electric energy. The electric energy is introduced to the first circuit's input end in electronic form. And under the control of kernel DC/DC chip 2502, a L11 connected with the kernel DC/DC chip 2502 is charged for the first period. Voltage inside C12 is zero at this time, so C12 cannot charge the accumulator battery 2508. After L11's voltage reaches rated voltage, the light voltage battery board 2500 and the L11 charge the accumulator battery 2508 and C12 together. From the second period, electric energy is introduced to the first circuit's input end in electronic form. And during the first half of the second period, the L11 is charged under the control of the kernel DC/DC chip 2502, meanwhile, the accumulator battery 2508 is charged via the C12, and the output voltage Vout1 is driven up to the rated voltage by a R11 connected with the C12 in parallel. During the second half of the second period, when the voltage of the L11 reaches the rated voltage, the C12 stops charging the accumulator battery 2508. The light voltage battery board 2500 and the L11 charge the accumulator battery 2508 and the C12 together.

The voltage introduced from the second battery board by the second circuit is Vin2, which is not equivalent to Vin1. Corresponding to the first circuit, in the second circuit, C21 corresponds to C11, C22 corresponds to C12, C13 corresponds to C23, and capacitance of the C11 is same as that of the C21, capacitance of the C12 is same as that of the C22, capacitance of the C13 is same as that of the C23. Output voltage of the second circuit is VOUT2, which is basically equivalent to VOUT1.

In Figure 25, the power supply system also included a current detection module 2503 and a current display module 2507. In order to detect current of the charging for the accumulator battery 2508 performed by the output controlling module 2501, input end of the current detection module 2503 is connected to output end of the output controlling module 2501. Output end of the current detection module 2503 is connected to input point of the accumulator battery 2508. The current detection module 2503 includes a resistance that converses a tested current into a tested voltage. And this resistance is called detection resistance R7 and detection circuit. The R7 and the accumulator battery 2508 are connected to the charging circuit in serial; the detection circuit further detects the current flowing via the R7 by detecting the voltage on the R7, in this way the charging current is figured out. The detection circuit includes an input operational amplifier 2504, which is used to collect the voltage signal on the R7; a differential operational amplifier 2505, which extracts weak differential signal from voltage signal and amplifies the extracted signal to a proper voltage range; a baseband chip with inner configured analogy/digital converter 2506 receives the amplified voltage, converts the voltage into current and then outputs the current to a subsequent current display module 2507. The current detection module 2503 can adopt the existing circuit current detection design in multimeter.

The current display module 2507 can control the displaying of the charging current value on a current value display end. One end of the current display module 2507 is connected to the output end of the current detection module 2503 via a baseband chip connection. And the other end of the current display module 2507 is connected to the current display end 2509. The current display end 2509 can be a LED display screen, an electric value screen, a signal light and so on. In embodiment of the present invention, as shown in Figure 5, the current display end 2509 is set at the mobile phone's front panel as well as the rear panel respectively. While in other embodiments of the present invention, the current display end 2509 can also be set at other positions, like the mobile phone's shell or display panel.

According to the display of the current display end 2509, the user can obtain instant information about charging the accumulator battery by the power supply device. In such way, the mobile terminal's position is adjusted, so that the light voltage battery board 2502 placed on the current display end 2509 can get better illumination condition, and the photoelectric conversion efficiency can be effectively increased.

In addition, in order to disclose how the two or more kinds of photoelectric conversion materials upon light voltage battery board effectively increase photoelectric conversion efficiency, data of some embodiments are disclosed as follows. Under the standard illumination intensity, photoelectric conversion efficiency of a 40 cm² monocrystalline silicon light voltage battery board is 16%; while under the same illumination intensity, photoelectric conversion efficiency of a 40 cm² second light voltage battery composed of monocrystalline silicon and GaAs is 18.22%, and monocrystalline silicon's area is 30 cm² and GaAs's area is 10 cm². It can be seen from the above data that light voltage battery board, which is composed of at least two or more kinds of polynary compound photoelectric materials, can increase photoelectric conversion efficiency to a certain extent.

The second light voltage battery, power supply method, power supply device and power supply system provided by the present invention adopt light voltage batteries made from various photoelectric materials, one of which is polynary compound photoelectric material, so that light voltage battery product bears a proper price and has excellent photoelectric conversion efficiency. In another word, based on the excellent photoelectric conversion efficiency of the polynary compound photoelectric material, with relatively small battery board area, the light voltage battery can make full use of solar energy and can provide stable power supply voltage for the power consuming devices.

The method, device and system for utilizing light voltage battery to supply power, based on parameter scale value corresponding to electric energy generated by a tested object under a certain illumination condition, adaptively adjust connection manner of multiple light voltage battery units in light voltage battery combination unit. In the way, it is applicable to obtain the electric energy for practical application from the light voltage battery combination unit, which can avoid an over-voltage or under-voltage electric energy outputted by the light voltage battery combination unit when the illumination condition keeps changing. More important, in the present invention's embodiment, the DC/DC converter for adjusting the battery's output voltage is not used, thus the embodiment can avoid wasting the electric energy collected by the light voltage battery to the best, and provide sufficient electric energy for the power-consuming devices to the best.

Preferably, embodiments of the present invention bring forward a scheme of utilizing light voltage battery to supply power in allusion to the requirement of high-effectively using solar energy. In embodiments of the present invention, based on the process of detecting the voltage generated by a single light voltage battery unit under current illumination condition and the connection strategy at the same time, a serial-parallel connection structure of battery group is dynamically constituted. In this way, the accumulator battery is charged high-effectively, or directly supplies power for power consuming devices. For example, according to embodiment of the present invention, mobile terminals are charged efficiently in an environment with intense illumination condition, and operate normally; while in an environment with average or bad illumination condition, when operating normally, the light voltage battery can still supply electric energy to the accumulator battery with little wastage.

The foregoing descriptions are preferred embodiments of the present invention, and are not for use in limiting the protection scope thereof. Any modification, equivalent replacement and improvement made under the spirit and principle of the present invention should be included in the protection scope thereof.

## Claims

1. A method for supplying power with light voltage battery, comprising:
measuring a parameter scale value corresponding to electric energy generated by a tested object under current illumination condition, wherein the tested object is a light voltage battery unit in a light voltage battery combination unit, and the light voltage battery combination unit comprises a plurality of light voltage battery units and converts luminous energy received under current illumination condition into electric energy (101);
selecting, according to a measuring result of the parameter scale value, a connection strategy that is corresponding to the measuring result and is used to indicate a working connection manner among the multiple light voltage battery units (102); and
connecting, according to the working connection manner indicated by the connection strategy, the multiple light voltage battery units (102).

2. The method according to Claim 1, further comprising:
outputting the electric energy generated by the light voltage battery combination unit, upon connecting the multiple light voltage battery units.

3. The method according to Claim 1, wherein, under the same illumination condition, the multiple light voltage battery units generate the same amount of electric energy.

4. The method according to Claim 3, wherein, the tested object comprises a single light voltage battery unit, and the parameter scale value comprises a voltage value;
the connection strategy comprises:
if the measuring result is larger than or equivalent to a preset high voltage threshold, in the connections among a plurality of light voltage battery units, changing at least one light voltage battery unit's connection manner from serial connection to parallel connection; or
if the measuring result is smaller than or equivalent to a preset high voltage threshold, in the connections among a plurality of light voltage battery units, changing at least one light voltage battery unit's connection manner from parallel connection to serial connection.

5. The method according to Claim 3, wherein, the tested object comprises a single light voltage battery unit, and the parameter scale value comprises a current value;
the connection strategy comprises:
if the measuring result is larger than or equivalent to a preset high current threshold, in the connections among a plurality of light voltage battery units, changing at least one light voltage battery unit's connection manner from parallel connection to serial connection; or
if the measuring result is smaller than or equivalent to a preset low current threshold, in the connections among a plurality of light voltage battery units, changing at least one light voltage battery unit's connection manner from serial connection to parallel connection.

6. The method according to Claim 2, further comprising:
receiving and storing, by an accumulator battery, the electric energy upon outputting the electric energy.

7. The method according to Claim 6, wherein, the receiving and storing by an accumulator battery the electric energy comprises:
among multiple accumulator batteries, selecting the accumulator battery with the lowest accumulator voltage to receive and store the electric energy.

8. The method according to Claim 6, wherein the accumulator battery comprises at least two kinds of accumulator battery modules, and capacity of a first accumulator battery module is less than that of other accumulator battery modules;
the receiving and storing by an accumulator battery the electric energy comprises:
selecting the first accumulator battery module to receive and store the electric energy.

9. The method according to Claim 1, wherein the light voltage battery unit comprises:
an accumulator battery module made from polynary compound photoelectric material whose photoelectric conversion efficiency is higher than that of silicon material; and
another accumulator battery module made from photoelectric materials other than the polynary compound photoelectric material.

10. A device for supplying power with light voltage battery, comprising:
a light voltage battery combination unit (201) including a plurality of light voltage battery units, converting electric energy received under current illumination condition into electric energy;
a measure unit (202), measuring a parameter scale value corresponding to the electric energy generated by a tested object, and the tested object is a light voltage battery unit in the light voltage battery combination unit;
a control unit (203), according to a measuring result of the parameter scale value, selecting a connection strategy that is corresponding to the measuring result and is used to indicate a working connection manner among the multiple light voltage battery units, and connecting the multiple light voltage battery units according to the working connection manner indicated by the connection strategy;
an output unit (204), outputting the electric energy generated by the light voltage battery combination unit and processed by the control unit.

11. A system for supplying power with light voltage battery, comprising:
a device (301) adopting light voltage battery to supply electric power, a symmetrical or asymmetrical accumulator battery (302, 504, 604);
wherein the device that adopts light voltage battery to supply electric power comprises: a light voltage battery combination unit including a plurality of light voltage battery units, a measure unit and a control unit;
the light voltage battery combination unit is configured to convert the electric energy received under current illumination condition into electric energy;
the measure unit is configured to measure a parameter scale value corresponding to the electric energy generated by a tested object which is the light voltage battery unit in light voltage battery combination unit;
the control unit is configured to select a connection strategy according to a measuring result of parameter scale value, wherein the connection strategy corresponds to the measuring result and is used to indicate a working connection manner among the multiple light voltage battery units, and the control unit is also configured to connect the multiple light voltage battery units according to the working connection manner indicated by the connection strategy;
the output unit is configured to output the electric energy generated by the light voltage battery combination unit and processed by the control unit
the symmetrical or asymmetrical accumulator battery is configured to receive and store the electric energy outputted by the output unit; and
the light voltage unit comprises one or a plurality of light voltage batteries, and the light voltage battery is made from a kind of photoelectric material; or the light voltage battery comprises: two kinds of light voltage battery modules, wherein one light voltage battery module is made from a polynary compound photoelectric material whose photoelectric conversion efficiency is higher than that of silicon material; the other light voltage battery module is made from photoelectric materials other than the polynary compound photoelectric material; and
the asymmetrical accumulator battery comprises at least two accumulator modules, wherein capacity of one accumulator module is lower than that of other accumulator modules.

12. The system according to Claim 11, wherein the system comprises a plurality of symmetrical accumulator batteries, and further comprises: a voltage detection unit and a charging control module (401);
the charging control module is configured to, according to a voltage result of each symmetrical accumulator battery measured by the voltage detector unit, select a charged symmetrical accumulator battery from the symmetrical accumulator batteries.

13. The system according to Claim 11, wherein the system comprises a plurality of symmetrical accumulator batteries and further comprises: a voltage detection unit and a discharging control module (402);
the discharging control module is configured to, according to a voltage result of each symmetrical accumulator battery measured by the voltage detector unit, select a discharged symmetrical accumulator battery from the symmetrical accumulator batteries.

14. The system according to Claim 11, further comprising:
a charging control unit (502) which is configured to, according to a preset charge control strategy, select a first accumulator battery module or a second accumulator battery module to receive electric energy outputted by the device adopting light voltage battery to supply electric power.

15. The system according to Claim 11 or 14, further comprising: a discharging control unit (503) which is configured to, according to a preset discharge control strategy, select the first accumulator battery module or the second accumulator battery module to supply power for power consuming devices.

16. A kind of asymmetrical accumulator battery, comprising:
at least two kinds of accumulator battery modules (2002, 2003), wherein capacity of one accumulator battery module is less than that of other accumulator battery modules.

17. A kind of light voltage battery converting received photonic energy into electric energy, comprising:
two kinds of light voltage battery modules (2002, 2003), wherein one light voltage battery module is made from polynary compound photoelectric material whose photoelectric conversion efficiency is higher than that of silicon material; and the other accumulator battery module is made from photoelectric materials other than the polynary compound photoelectric material.

18. The light voltage battery according to Claim 17, wherein the polynary compound photoelectric materials comprises: GaAs, InP, SiC or GaN;
the silicon material comprises: monocrystalline silicon, poly crystal silicon or amorphous silicon.

19. The light voltage battery according to Claim 17 or 18, wherein the other photoelectric materials comprises: biological solar energy material, the silicon material or nano crystal.
